# EUROPÄISCHE PATENTSCHRIFT

(11) **EP 2 557 107 B1**
(45) Veröffentlichungstag und Bekanntmachung des Hinweises auf die Patenterteilung: **02.09.2015**
(21) Anmeldenummer: 12176057.3
(22) Anmeldetag: 12.07.2012
(51) Int. Cl.: C08G 77/08, C08G 77/16, C08G 77/26, C08F 283/12

(54) **VERFAHREN ZU HERSTELLUNG VON POLYSILOXANEN MIT STICKSTOFFHALTIGEN GRUPPEN**
METHOD FOR PRODUCING POLYSILOXANES WITH GROUPS CONTAINING NITROGEN
PROCÉDÉ DE FABRICATION DE POLYSILOXANES DOTÉS DE GROUPES CONTENANT DE L'AZOTE

(30) Priorität: 12.08.2011 DE 102011110100
(43) Veröffentlichungstag der Anmeldung: 13.02.2013
(73) Patentinhaber: Evonik Degussa GmbH, 45128 Essen (DE)
(72) Erfinder: Henning, Frauke, 45259 Essen (DE); Lohse, Andrea, 46236 Bottrop (DE); Mahring, Ulrike, 45357 Essen (DE); Kuppert, Dirk, 63739 Aschaffenburg (DE)

(56) Entgegenhaltungen:
- EP-A1- 0 763 556
- EP-A1- 1 006 146
- EP-A1- 1 431 330
- DE-A1- 19 733 168
- DE-A1-102008 000 140
- US-A- 4 523 002

## Beschreibung

Die vorliegende Erfindung ist gerichtet auf ein Verfahren zur Herstellung von mindestens eine Stickstoffhaltige Gruppe enthaltenden Polysiloxanen, insbesondere aminofunktionellen Polysiloxanen, durch Umsetzung der Komponenten A) gleiche oder unterschiedliche endständig hydroxyfunktionelle, lineare oder verzweigte Polysiloxane, B) gleiche oder unterschiedliche Alkoxysilane der Formel

R¹ₓR²₃₋ₓSiR³ (I)

mit R1 gleiche oder verschiedene Alkylreste mit 1 bis 4 Kohlenstoffatomen, R2 gleiche oder verschiedene Alkoxyreste mit 1 bis 4 Kohlenstoffatomen, R3 zumindest ein Stickstoffatom aufweisender organischer Rest, x = 0 bis 2, und C) Wasser, in Gegenwart einer oder mehrerer Phosphor-haltigen, Brönstedt-sauren Verbindungen D) dadurch gekennzeichnet, dass die Menge den eingesetzten Komponente D) von 0.1 bis 30 mol-%, bezogen auf die Menge an eingesetzten Alkoxysilanen der Komponente B) beträgt, wobei als weitere Komponente E) ein Disilazan eingesetzt wird, auf die entsprechend erhältlichen Stickstoff-haltige Gruppen enthaltenden Polysiloxane, sowie deren Verwendung.

### Stand der Technik

Aminofunktionelle Siloxane finden breite Anwendung als Bestandteile von Textil-pflegenden Zusammensetzungen, insbesondere von Textil-weichmachenden Zusammensetzungen, als Bestandteile von Wasch- oder Reinigungsmitteln für Textilien und Hydrophobierungsmitteln. Eine Vielzahl struktureller Variationen dieser Stoffgruppe findet sich beschrieben im Stand der Technik und ist über unterschiedliche Herstellrouten zugänglich.

Polysiloxane mit hohen Modifikationsgraden bei einer unabhängig vom Stickstoffgehalt variabel einstellbaren Kettenlänge sind durch seitständige Funktionalisierung eines Polysiloxans mit Aminogruppen enthaltenden organischen Substituenten zugänglich. Zur Erzielung optimaler Anwendungseigenschaften ist es vorteilhaft, den Stickstoffgehalt eines aminofunktionellen Polysiloxans und die Molmasse unabhängig voneinander einstellen zu können.

Der Stand der Technik offenbart eine Vielzahl an Schriften zu seitständig modifizierten Aminosiloxanen. Die basisch katalysierte Äquilibrierung zur Herstellung, wie beispielsweise in der EP 1 972 330 in den Absätzen [0154] und [0155] dargelegt, kann je nach verwendeten Edukten entweder zu endständig dihydroxyfunktionellen, seitständig aminomodifizierten Polysiloxanen führen oder zu seitständig aminomodifizierten Polysiloxanen führen, deren Kettenenden mit Trimethylsilylgruppen endverkappt sind. Solche endverkappten Polysiloxane weisen im Vergleich zu ihren mit freien SiOH-Gruppen versehenen Strukturanaloga nicht nur eine bessere Lagerstabilität in Substanz auf, sondern verhindern auch bei der Handhabung wässriger Emulsionen solcher Polysiloxane gelartige Ausfällungen und Aufwachsungen. Diese Gelabscheidungen sind bei Applikationen im Textilbereich besonders unerwünscht.

Die Kondensationspolymerisation führt gemäß dem Stand der Technik, wie beispielsweise in der US 7,238,768 B2 beschrieben ist, zu aminomodifizierten Polysiloxanen mit Hydroxygruppen oder Alkoxygruppen an den Kettenenden. Als Katalysatoren werden Carbonsäuren eingesetzt. Die unveröffentlichte Patentanmeldung DE 102010042861.2 beschreibt eine carbonsäurekatalysierte Kondensationspolymerisation, die hydrolysestabile Polysiloxane mit Trimethylsiloxygruppen an den Kettenenden und unterschiedlichen seitständigen Modifikationen in definierten Verhältnissen zugänglich macht.

Die US 6,171,515 B1 beschreibt endverkappte sowie dialkoxyfunktionelle Aminopolysiloxane, die in einem der Siloxanpolymerisation nachgeschalteten Syntheseschritt eine Funktionalisierung der primären und sekundären Aminogruppen mit epoxyfunktionellen Monomeren, wie beispielsweise Glycidol, erfahren. Eine ähnliche Funktionalisierung von Aminosiloxanen mit Alkylenoxiden beschreibt die EP0399706. Weitere Funktionalisierungen von aminofunktionellen Polysiloxanen mit Glycerincarbonat oder Gluconolacton sind in der EP 1 972 330 bzw. in J. Phys. Chem. B 2010, 114, 6872-6877 beschrieben.

Aminofunktionelle Polysiloxane werden stetig verbessert, um den damit behandelten textilen Flächengebilden vorteilhafte Effekte zu vermitteln, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., zu reduzieren. Darüber hinaus soll bei einem guten Weichgriff des Gewebes auch eine ausreichende Hydrophilie erreicht werden. Ein Nachteil von Textil-weichmachenden Formulierungen auf Basis von Polysiloxanen des Standes der Technik besteht in der Oxidationsempfindlichkeit der stickstofftragenden Gruppen. Sowohl die aminofunktionellen Polysiloxane als auch deren Formulierungen weisen in Abhängigkeit der Lagerbedingungen eine zunehmende Gelbfärbung auf. Desweiteren kann die Viskosität des Polysiloxans bei Lagerung ansteigen bis hin zur Vergelung. Unvorteilhafte Verfahrensbedingungen bei der Herstellung, wie beispielsweise die Temperaturbelastung, können bereits die Lagerstabilität des aminofunktionellen Siloxans oder dessen Formulierungen beeinträchtigen oder sogar während der Synthese zu Vergelung führen.

Der Stand der Technik, wie beispielhaft in der WO 1998019665 oder DE 102009048978 erläutert, beschreibt zur Stabilisierung von aminhaltigen Formulierungen die Verwendung von Reduktionsmitteln wie beispielsweise Sulfiten. Um das Oxidationspotential weiterhin zu minimieren werden die alkalischen pH-Werte der aminhaltigen Formulierungen durch Zugabe von milden löslichen Säuren in den neutralen bis schwach sauren Bereich verschoben.

Angesichts der Nachteile des Standes der Technik besteht Bedarf an Textil-weichmachenden Polysiloxanen mit erhöhter Lagerstabilität. Es besteht weiterhin Bedarf an einem Herstellverfahren, welches vergleichsweise niedrigviskose, lagerstabile aminofunktionelle Polysiloxane zugänglich macht.

Aufgabe der vorliegenden Erfindung war deshalb die Bereitstellung eines einfachen Verfahrens zur Herstellung von Stickstoff-haltige Gruppen aufweisenden Polysiloxanen, welches einen oder mehrere der Nachteile der Verfahren des Standes der Technik vermeidet.

Überraschenderweise wurde gefunden, dass diese Aufgabe gelöst werden kann durch das nachfolgend beschriebene erfindungsgemäße Verfahren zur Herstellung von mindestens eine Stickstoffhaltige Gruppe enthaltenden Polysiloxanen, bei dem hydroxyfunktionelle, lineare oder verzweigte Polysiloxane, Alkoxysilane die mindestens einen, ein Stickstoffatom aufweisenden organischen Rest aufweisen, und Wasser, in Gegenwart einer oder mehrerer Phosphor-haltiger, Brönstedtsaurer Verbindungen umgesetzt werden.

Gegenstand der vorliegenden Erfindung ist deshalb ein Verfahren zur Herstellung von mindestens eine Stickstoffhaltige Gruppe enthaltenden Polysiloxanen, insbesondere aminofunktionellen Polysiloxanen, durch Umsetzung der Komponenten A) gleiche oder unterschiedliche endständig hydroxyfunktionelle, lineare oder verzweigte Polysiloxane, B) gleiche oder unterschiedliche Alkoxysilane der Formel

R¹ₓR²₃₋ₓSiR³ (I)

mit R1 gleiche oder verschiedene Alkylreste mit 1 bis 4 Kohlenstoffatomen, R2 gleiche oder verschiedene Alkoxyreste mit 1 bis 4 Kohlenstoffatomen, R3 zumindest ein Stickstoffatom aufweisender organischer Rest, x = 0 bis 2, und C) Wasser, in Gegenwart einer oder mehrerer Phosphor-haltigen, Brönstedt-sauren Verbindungen D), wie in den Ansprüchen und in der nachfolgenden Beschreibung ausführlich beschrieben.

Ebenfalls Gegenstand der vorliegenden Erfindung sind die entsprechend erhältlichen Stickstoff-haltige Gruppen enthaltenden Polysiloxane, sowie deren Verwendung.

Die bei der Herstellung der Stickstoff-haltige Gruppen aufweisenden Polysiloxane verwendeten phosphorhaltigen, brönstedt-sauren Verbindungen, die insbesondere als Kondensationspolymerisationskatalysatoren verwendet werden, können nach der Herstellung in der Zusammensetzung enthaltend die erfindungsgemäß hergestellten Stickstoff-haltige Gruppen aufweisenden Polysiloxane verbleiben. Dies hat den Vorteil, dass ein aufwändiger Abtrennschritt unterbleiben kann. Ein weiterer Vorteil besteht darin, dass der Verbleib der phosphorhaltigen, brönstedt-sauren Verbindungen im Reaktionsgemisch einen positiven Einfluss auf die Lagerstabilität entsprechender Zusammensetzungen hat. Dies ist insofern unerwartet und für den Fachmann nicht vorhersehbar, da der aktive Katalysator in der Regel entfernt werden muss, um die Lagerstabilität des Produktes zu gewährleisten. So ist es bei der Verwendung von Tetraalkylammonium-Katalysatoren unerlässlich, den Katalysator nach der Reaktion durch Aufheizen zu zersetzen, wie es beispielhaft in der EP 1 972 330 im Abschnitt [0154] beschrieben ist.

Ein weiterer Vorteil gegenüber den carbonsäurekatalysierten Kondensationsverfahren im Stand der Technik, beispielsweise der US 7,238,768 B2, besteht in einer vergleichsweise geringeren Vergilbungsneigung während der Reaktion. Insbesondere bei erhöhter Temperatur und mangelhafter Inertisierung neigen die Stickstoff-haltige Gruppen aufweisenden Reaktanden und Produkte zu Vergilbung. In Gegenwart von Carbonsäuren besteht bei erhöhten Temperaturen weiterhin die Gefahr von Nebenreaktionen, beispielsweise durch Amidierungsreaktionen. Um hohe Kondensationsgrade zu erzielen sind jedoch höhere Temperaturen vorteilhaft. Mithilfe des erfindungsgemäßen Verfahrens werden Nebenreaktionen auch bei höheren Reaktionstemperaturen von ca. 100°C vermieden und somit bessere Kondensationsausbeuten in kürzerer Zeit erzielt.

Das erfindungsgemäße Verfahren, die so erhältlichen Polysiloxane, sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben um Zahlenmittel. Werden nachfolgend Messwerte angegeben, so wurden diese Messwerte, wenn nicht anders angegeben, bei einem Druck von 101325 Pa und einer Temperatur von 23°C ermittelt.

Das erfindungsgemäße Verfahren zur Herstellung von aminofunktionellen Polysiloxanen zeichnet sich durch die Umsetzung der Komponenten
A) gleiche oder unterschiedliche endständig hydroxyfunktionelle, lineare oder verzweigte Polysiloxane,
B) gleiche oder unterschiedliche Alkoxysilane der Formel (I)

   R¹ₓR²₃₋ₓSiR³ (I)

   mit
   R¹ gleiche oder verschiedene Alkylreste mit 1 bis 4 Kohlenstoffatomen, vorzugsweise Methyl- oder Ethylreste, bevorzugt Methylreste,
   R² gleiche oder verschiedene, vorzugsweise gleiche, Alkoxyreste mit 1 bis 4 Kohlenstoffatomen, vorzugsweise Methoxy- oder Ethoxyreste,
   R³ zumindest ein Stickstoffatom aufweisender organischer Rest, vorzugsweise ein Rest -(CR⁴₂)_{y}-[NR⁵-(CR⁴₂)_{z}]ₑNR⁵₂ mit y = 1 bis 6, vorzugsweise 1 bis 4, bevorzugt 3, z = 1 bis 6, vorzugsweise 1 bis 4, bevorzugt 2 oder 3, e = 0 bis 6, vorzugsweise 0 bis 3, bevorzugt 0 oder 1, R⁴ gleich oder verschieden Alkyl, bevorzugt mit 1 bis 10 Kohlenstoffatomen, oder H, bevorzugt H und R⁵ gleich oder verschieden Alkyl, bevorzugt mit 1 bis 10 Kohlenstoffatomen, H, linear oder verzweigt Hydroxyalkyl, bevorzugt mit 1 bis 20 Kohlenstoffatomen, linear oder verzweigt Polyhydroxyalkyl, bevorzugt mit 1 bis 20 Kohlenstoffatomen, linear oder verzweigt Acyl oder Hydroxyacyl, bevorzugt mit 1 bis 20 Kohlenstoffatomen, insbesondere -C(O)-[CH(OH)]₄-CH₂OH, linear oder verzweigt Carboxyacyl, bevorzugt mit 1 bis 20 Kohlenstoffatomen, insbesondere -C(O)-CH₂-CH₂-COOH, linear oder verzweigt Carbamatoalkyl, bevorzugt mit 1 bis 20 Kohlenstoffatomen und 1-20 Sauerstoffatomen, insbesondere -C(O)-O-CH₂-CH(OH)-CH₂OH, -C(O)-NH₂ (Ureido), Ureidoalkyl bevorzugt mit 1 bis 20 Kohlenstoffatomen, ein Rest -C(NH)-NH₂ welcher an ein Stickstoffatom gebunden zu einem Guanidinrest führt, ein Alkylamino(alkylimino)alkylenrest der Formel -C(NR⁶)-NR⁶₂ mit R⁶ bevorzugt Alkyl mit 1 bis 20 Kohlenstoffatomen; R³ ist bevorzugt ein Rest -(CH₂)_{y'}-NR^{4'}R^{5'} mit y' = 1 bis 10, vorzugsweise 2 bis 5, bevorzugt 3, R⁴ und R^{5'} gleich oder verschieden H oder -(CH₂)_{z'}-NH₂ mit z' = 1 bis 10, vorzugsweise 2 bis 5, bevorzugt 2, wobei mindestens einer der Reste R⁴ oder R⁵ bevorzugt H ist,
   x = 0 bis 2, vorzugsweise 0 oder 1, und
C) Wasser,
in Gegenwart einer oder mehrerer Phosphor-haltigen, Brönstedt-sauren Verbindungen D), aus.

Die Menge der eingesetzten Komponente D) beträgt von 0,1 bis 30 mol-%, bevorzugt 1 bis 20 mol-% und besonders bevorzugt von 5 bis 15 mol-% bezogen auf die Menge an eingesetzten Alkoxysilanen (Komponente B).

Der Anteil an Wasser bezogen auf die Gesamtmenge der Komponenten A) bis D) beträgt vorzugsweise von 0,001 bis 1 Gew.-%, bevorzugt von 0,01 bis 0,5 Gew.-%.

Vorzugsweise werden in dem erfindungsgemäßen Verfahren die Komponenten A) und B) in solchen Mengen eingesetzt, dass das molare Verhältnis von OH-Gruppen der Komponente A) zu Resten R² der Komponente B) 1 zu 1 oder >1 zu 1, besonders bevorzugt von >1 bis 2 zu 1 beträgt.

Als Komponente A) werden vorzugsweise hydroxyfunktionelle Polysiloxane der Formel (III) 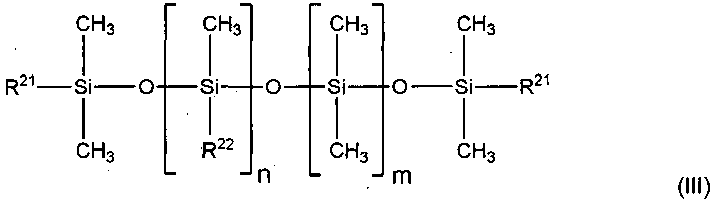 eingesetzt, mit
n = 0 bis 10, vorzugsweise 0,
m = 1 bis 500, vorzugsweise 10 bis 200, insbesondere 15 bis 100,
R²¹ gleich oder verschieden OH oder CH₃, vorzugsweise gleich OH, wobei mindestens ein Rest R²¹ = OH ist,
R²² gleich oder verschieden OH oder gleiche oder ungleiche Reste aus der Gruppe umfassend lineare, cyclische oder verzweigte, aliphatische oder aromatische, gesättigte oder ungesättigte Kohlenwasserstoffreste mit 2 bis zu 20 C-Atomen

   -CH₂-R^{IV},

   -CH₂-CH₂-(O)ₓ'-R^{IV},

   -CH₂-CH₂-CH₂-O-CH₂-CH(OH)-CH₂OH,

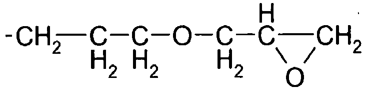

   und

   -CH₂-CH₂-CH₂-O-CH₂-C(CH₂OH)₂-CH₂-CH₃,
mit
- x': gleich 0 oder 1 und
- R^{IV}: ein gegebenenfalls substituierter, gegebenenfalls mit Halogenen substituierter Kohlenwasserstoffrest mit 1 bis 50 Kohlenstoffatomen,
wobei R²² vorzugsweise OH ist.

Es kann vorteilhaft sein, wenn die Komponente A) in Mischung mit einer Komponente A1) vorliegt. Bevorzugte Verbindungen der Komponente A1) sind Alkylalkoxysilane, bevorzugt Dimethyldialkoxysilane oder Methyltrialkoxysilane, wobei Alkoxy vorzugsweise die Bedeutung Methoxy oder Ethoxy hat. Bevorzugt werden die Komponenten A) und A1) im molaren Verhältnis von 10:1 bis 1000:1 eingesetzt, insbesondere 100:1 bis 1000:1.

Als Komponente B) werden vorzugsweise N-(Aminoethyl)-aminopropyl-methyl-dimethoxysilan, welches unter der Bezeichnung Dynasylan^{®} 1411 bei Evonik Industries AG erhältlich ist oder Aminopropyl-methyl-diethoxysilan, welches unter der Bezeichnung Dynasylan^{®} 1505 bei Evonik Industries AG erhältlich ist, eingesetzt.

Als Verbindung D) wird in dem erfindungsgemäßen Verfahren vorzugsweise eine Verbindung der Summenformel (II)

HₐR¹¹_{b}P_{c}O_{d} (II)

mit
R¹¹ = gleiche oder verschiedene, vorzugsweise gleiche, ein- oder mehrwertige, gegebenenfalls Phosphor-, Sauerstoff- und/oder Stickstoffatom(e) aufweisende Kohlenwasserstoffreste,
a = (c + 2) oder < (c + 2), vorzugsweise 2,
b = (c + 2) oder < (c + 2), vorzugsweise 1,
c = 1 bis 10, vorzugsweise 1 bis 5, insbesondere 1,
d = (3c + 1) oder < (3c + 1), vorzugsweise 3,
mit der Maßgabe, dass a + b = c + 2 und a > 0, vorzugsweise größer-gleich 1 ist, eingesetzt.

Bevorzugt werden als Komponente D) in dem erfindungsgemäßen Verfahren monomere oder oligomere Phosphorsäuren, monomere oder oligomere Phosphon-oder Phosphinsäuren, Hypodiphosphon- oder Hypodiphosphinsäuren, oder mit Kohlenwasserstoffresten substituierte organische Derivate einer der vorgenannten Säuren, oder Gemische davon, eingesetzt. Es können auch solche Säuren eingesetzt werden, die als verbrückte Diphosphonsäuren bezeichnet werden können, wie beispielsweise 1-Hydroxyethan-(1,1-diphosphonsäure), Aminotrimethylenphosphonsäure, Diethylentriaminpenta(methylenphosphonsäure), Ethylendiamintetra(methylenphosphonsäure) oder 2-Phosphonobutan-1,2,4-tricarbonsäure. Besonders bevorzugt ist der Einsatz von Phosphorsäure und Alkylphosphonsäuren, insbesondere Octylphosphonsäure als Komponente D). Die Komponente D) kann bei Raumtemperatur oder Reaktionstemperatur als Feststoff vorliegen. In so einem Fall ist es vorteilhaft, sie in einer geringen Menge Lösungsmittel, vorzugsweise 0,3 g bis 2 g Lösungsmittel pro 1 g der Komponente D) aufzulösen und dann die Lösung in die Reaktionsmischung zu geben. Geeignete Lösungsmittel sind z.B. Monoole, vorzugsweise Methanol, Ethanol, n-Propanol oder Isopropanol, bevorzugt Ethanol. Besonders bevorzugt ist die Verwendung einer ethanolischen Lösung von Octylphosphonsäure. Bevorzugt wird eine hochkonzentrierte Lösung eingesetzt mit einem Gehalt an Komponente D), insbesondere Phosphonsäure von >= 50 Gew.-%.

Das erfindungsgemäße Verfahren schließt eine Bildung der katalytisch aktiven phosphorhaltigen, brönstedt-sauren Verbindungen (Komponente D) aus inaktiven Vorstufen in situ vor oder während der Reaktion mit ein. Beispielhaft genannte inaktive Vorstufen sind Phosphor- oder Phosphonsäureester, welche durch Hydrolyse die katalytisch aktive Verbindung hervorbringen oder auch Salze aus denen in Gegenwart einer geeigneten Hilfssäure die phosphorhaltigen, brönstedt-sauren Verbindungen gebildet werden.

Es kann vorteilhaft sein, wenn zusätzlich zur Komponente D) eine weitere katalytisch aktive Komponente D1) eingesetzt wird. Bevorzugte Komponenten D1) können z. B. Carbonsäuren, wie z. B. Essigsäure, Propionsäure, Oelsäure oder Isononansäure, aber auch Mineralsäuren, wie z.B. HCl, H₃PO₄, H₂SO₄, ggf. mit Wasserzusatz sein, wobei die Komponente D1) vorzugsweise keine Carbonsäure ist. Besonders bevorzugt stellt die Komponente D1) eine Hilfssäure dar.

In dem erfindungsgemäßen Verfahren wird als weitere Komponente E) ein Disilazan, vorzugsweise 1,1,1,3,3,3-Hexamethyldisilazan oder mit unterschiedlichen Kohlenstoffresten substituierte Disilazane, wie beispielsweise Divinyltetramethyldisilazan, oder eine mit einer mit einer Si-OH-Gruppe reaktiven Gruppe ausgestatte Verbindung, vorzugsweise ein Monool, bevorzugt ein Monool, welcher 1 bis 30, vorzugsweise 4 bis 22 und besonders bevorzugt 8 bis 18 Kohlenstoffatome aufweist, besonders bevorzugt ein Fettalkohol, bevorzugt ausgewählt aus Stearyl- und Laurylalkohol, eingesetzt. Bevorzugt wird als weitere Komponente E) 1,1,1,3,3,3-Hexamethyldisilazan eingesetzt. Der Anteil an Komponente E) beträgt vorzugsweise 0,01 bis 0,5 mol, insbesondere 0,03 bis 0,3 mol, bezogen auf 1 mol der Komponente A).

Das Verfahren kann kontinuierlich oder diskontinuierlich durchgeführt werden. Vorzugsweise wird das Verfahren diskontinuierlich (Batch-Fahrweise) durchgeführt.

Das Verfahren wird vorzugsweise bei Temperaturen von 0°C bis 150°C, bevorzugt von 20°C bis 100°C, durchgeführt.

Das gesamte erfindungsgemäße Verfahren kann bei Überdruck, Normaldruck oder erniedrigtem Druck durchgeführt werden. Vorzugsweise wird das Verfahren bei einem Druck von 1 bis 2000 mbar, bevorzugt 2 bis 1013 mbar durchgeführt.

Es kann vorteilhaft sein, das erfindungsgemäße Verfahren in Teilschritten durchzuführen:

### Schritt A:

Zusammengeben und inniges Mischen der Komponente A) mit der gesamten Menge oder einer Teilmenge der Komponente D) sowie ggf. C). Die Durchmischung kann mit jedwedem Rührer in der Batch-Fahrweise oder mit statischen Mischern in einer kontinuierlichen Fahrweise erfolgen. In Schritt A wird die Mischung vorzugsweise auf eine Temperatur von 50 bis 100 °C, bevorzugt 75 bis 90 °C aufgeheizt. Wird in dem erfindungsgemäßen Verfahren die Komponente E) mit eingesetzt, so erfolgt die Zugabe dieser Komponente ebenfalls in Schritt A. Das bei der Reaktion der Komponenten A) und E) ggf. entstehende Ammoniak wird vorzugsweise durch Ausgasen lassen vor dem Verfahrenschritt B entfernt.

### Schritt B:

Zugabe der Komponente B) und, falls in Schritt A noch nicht oder nicht vollständig erfolgt der Komponente D) und/oder C) und anschließendes Anlegen eines Unterdrucks, vorzugsweise von 1 mbar bis 500 mbar, wobei freiwerdender Alkohol vorzugsweise abdestilliert wird. Der Schritt B wird vorzugsweise bei einer Temperatur von 75 bis 125 °C, bevorzugt 80 bis 110 °C durchgeführt.

### Schritt C:

Belüften des Reaktionsgemisches auf Normaldruck mit einem Gas, vorzugsweise mit Luft oder einem Inertgas, bevorzugt mit Stickstoff und Abkühlen des Reaktionsgemisches auf Umgebungstemperatur und ggf. Aufarbeitung des Reaktionsgemisches. Eine solche Aufarbeitung kann z. B. darin bestehen, dass das Reaktionsgemisch zur Abtrennung von ggf. angefallenen Feststoffanteilen filtriert wird oder aber auch desodoriert wird.

Durch Begasung mit einem Gas, vorzugsweise mit einem Inertgas, bevorzugt mit Stickstoff kann sowohl die Durchmischung in Schritt A als auch die Destillation in Schritt B unterstützt werden. Die Begasung kann durch die Verwendung eines Blasensäulenreaktors oder die Verwendung einer Gasringleitung im Kessel erfolgen.

In dem erfindungsgemäßen Verfahren ist auch eine andere Reihenfolge der Umsetzung möglich. So kann z. B. zuerst die Komponente D) mit B) und ggf. C) gemischt bei 70 bis 125 °C umgesetzt werden, wobei die Umsetzung vorzugsweise bei einem Unterdruck von 1 mbar bis 500 mbar (absolut) durchgeführt wird, und wobei freiwerdender Alkohol vorzugsweise abdestilliert wird. Dem so erhaltenen Reaktionsgemisch wird dann die Komponente A) zugefügt.

Mittels des erfindungsgemäßen Verfahrens sind Stickstoff-haltige Gruppen enthaltende Polysiloxane sowie Zusammensetzungen, die ein Stickstoff-haltige Gruppen enthaltendes Polysiloxan aufweisen, erhältlich. Im Regelfall sind die nach dem erfindungsgemäßen Verfahren erhaltenen Produkte (Stickstoff-haltige Gruppen enthaltende Polysiloxane bzw. Zusammensetzungen, die ein Stickstoffhaltige Gruppen enthaltendes Polysiloxan aufweisen) transparent und farb- und geruchslos, was einen Vorteil des erfindungsgemäßen Verfahrens darstellt.

Die Stickstoff-haltige Gruppen enthaltende Polysiloxane können durch dem Fachmann bekannte Verfahren weiter derivatisiert werden. Mögliche Verfahren zur Derivatisierung werden z. B. in US 6,171,515, EP 0399706 oder EP 1972330 beschrieben.

Erfindungsgemäße Stickstoff-haltige Gruppen enthaltende Polysiloxane zeichnen sich dadurch aus, dass sie durch das erfindungsgemäße Verfahren hergestellt wurden.

Erfindungsgemäße Zusammensetzungen zeichnen sich dadurch aus, dass sie mindestens ein Stickstoff-haltige Gruppen enthaltendes Polysiloxan sowie eine einer oder mehrerer Phosphor-haltigen, Brönstedt-sauren Verbindung D), vorzugsweise solche wie oben definiert, aufweisen, und vorzugsweise durch das erfindungsgemäße Verfahren erhalten werden können.

Das Gewichtsprozentuale Verhältnis von Stickstoff-haltige Gruppen enthaltenden Polysiloxanen zu Phosphor-haltigen, Brönstedt-sauren Verbindungen D) beträgt vorzugsweise von 90,00 Gew.-% bis 99,99 Gew.-%, bevorzugt von 95,00 Gew.-% bis 99,90 Gew.-% und besonders bevorzugt von 97,00 Gew.-% bis 99,70 Gew.-% des Stickstoff-haltige Gruppen tragenden Polysiloxans. Der gewichtsprozentuale Anteil der Phosphor-haltigen, Brönstedt-sauren Verbindungen D) beträgt dementsprechend vorzugsweise von 10,00 Gew.-% bis 0,01 Gew.-%, bevorzugt von 5,00 Gew.-% bis 0,10 Gew.-% und besonders bevorzugt von 3,00 Gew.-% bis 0,30 Gew.-%.

Erfindungsgemäße, eine Stickstoff-haltige Gruppe enthaltende Polysiloxane oder erfindungsgemäße Zusammensetzungen können als Textil-pflegende Zusammensetzungen, als Wasch- oder Reinigungsmittel für Textilien oder als Hydrophobierungsmittel oder zur Herstellung dieser oder als Bestandteil dieser verwendet werden.

Unter einer Textil-pflegenden Zusammensetzung wird im Rahmen der vorliegenden Anmeldung jede Zusammensetzung verstanden, die damit behandelten textilen Flächengebilden einen vorteilhaften Effekt vermittelt, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., reduziert. Besonders bevorzugt ist, dass die Textil-pflegende Zusammensetzung eine Textilweichmachende Zusammensetzung (Weichspüler) ist. Stand der Technik ist, dass Weichspülerzusammensetzungen eine oder mehrere Silicone oder organisch modifizierte Siloxane enthalten können, die z.B. das Verknittern von Gewebe nach dem Spülgang und dem Trocknen vermindern, das Bügeln erleichtern, eine erhöhte Weichheit oder ein verbessertes Rücknetzvermögen bewirken. Offenbart wird dies zum Beispiel in den WO 9524460, FR7621830, GB 1596792, US 4426299, US 4806255, GB 0239910 und US 4855072.

Die Verwendung von Mikroemulsionen zum Einbringen von Siliconen in Weichspülerformulierungen wird zum Beispiel in der WO 92/01776 beschrieben. Die Verwendung von Makroemulsionen zum Einbringen von Siliconen in Weichspülerformulierungen wird z. B. in den WO A 97/31997 und WO A 97/31998 beschrieben.

Die erfindungsgemäßen Zusammensetzungen können Mikro- oder Makroemulsionen sein.

Die erfindungsgemäßen Zusammensetzungen, insbesondere Textilweichmachende Zusammensetzungen (Weichspüler) weisen vorzugsweise von 5 bis 98 Gew.-% bevorzugt von 75 bis 90 Gew.-% an Wasser bezogen auf die Gesamtzusammensetzung auf.

Sind die erfindungsgemäßen Zusammensetzungen Textilweichmachende Zusammensetzungen (Weichspüler), so können diese eine oder mehrere kationische textilweichmachende Verbindungen enthalten, die eine oder mehrere langkettige Alkylgruppen in einem Molekül aufweisen, wie beispielsweise Methyl-N-(2-hydroxyethyl)-N,N-di(talgacyloxyethyl)ammonium-Verbindungen oder N,N-Dimethyl-N,N-di(talgacyloxyethyl)ammonium-Verbindungen. Weitere geeignete Ammoniumverbindungen offenbart die US 2010/0184634 in den Absätzen [0027] bis [0068].

Die Weichspüler können darüber hinaus weitere Additive und Hilfsstoffe enthalten, insbesondere Parfüm, Farbstoffe, Viskositätsregulatoren, Entschäumer, Konservierungsmittel, organische Lösemittel, nicht siloxanhaltige Polymere und/oder andere nicht erfindungsgemäß hergestellte siloxanhaltige Polymere. Insbesondere können die erfindungsgemäßen Zusammensetzungen in Summe von 0,001 bis 25 Gew.-%, besonders bevorzugt 0,01 bis 15 Gew.-% eines oder mehrerer unterschiedlicher Additive oder Hilfsstoffe enthalten.

Als Parfüm können alle für Weichspüler aus dem Stand der Technik als geeignet bekannte Duftstoffe oder Duftstoffmischungen eingesetzt werden, vorzugsweise in Form eines Parfümöles. Beispiele für Duft- bzw. Riechstoffe werden unter anderem in der DE 197 51 151 A1, Seite 4, Zeile 11 - 17 offenbart. Insbesondere können die erfindungsgemäßen Zusammensetzungen von 0,01 bis 10 Gew.-%, besonders bevorzugt 0,1 bis 5 Gew.-% bezogen auf die Gesamtzusammensetzung der Zusammensetzung eines oder mehrerer Parfüme enthalten.

Als Farbstoffe können alle für Weichspüler aus dem Stand der Technik als geeignet bekannten Farbstoffe eingesetzt werden, wobei wasserlösliche Farbstoffe bevorzugt sind. Beispiele für geeignete wasserlösliche handelsübliche Farbstoffe sind SANDOLAN^{®} Walkblau NBL 150 (Hersteller Clariant) und Sicovit^{®} Azorubin 85 E122 (Hersteller BASF). Insbesondere können die erfindungsgemäßen Zusammensetzungen von 0,001 bis 0,1 Gew.-%, besonders bevorzugt von 0,002 bis 0,05 Gew.-% eines oder mehrerer Farbstoffe enthalten.

Als Viskositätsregulator zur Verringerung der Viskosität kann der Weichspüler ein Alkalimetall- oder Erdalkalimetallsalz, oder Gemische davon, vorzugsweise Calciumchlorid, bevorzugt in einer Menge von 0,05 bis 2 Gew.-% bezogen auf die Gesamtzusammensetzung der Zusammensetzung enthalten.

Als Viskositätsregler zur Erhöhung der Viskosität kann der wässrige Weichspüler einem aus dem Stand der Technik geeignet bekannten Verdicker enthalten, wobei die aus WO 2007/125005 bekannten Polyurethanverdicker bevorzugt sind. Beispiele für geeignete Verdicker sind TEGO^{®} Visco Plus 3030 (Hersteller Evonik Tego Chemie), Acusol^{®} 880 und 882 (Hersteller Rohm & Haas), Rheovis^{®} CDE (Hersteller BASF), Rohagit^{®} KF 720 F (Hersteller Evonik Röhm GmbH) und Polygel^{®} K100 von Neochem GmbH.

Als Entschäumer können alle für Weichspüler aus dem Stand der Technik als geeignet bekannten Entschäumer eingesetzt werden. Beispiele für geeignete handelsübliche Entschäumer sind Dow Corning^{®} DB-110A und TEGO^{®} Antifoam^{®} 7001 XP. Insbesondere können die erfindungsgemäßen Zusammensetzungen von 0,0001 bis 0,05 Gew.-%, bevorzugt von 0,001 bis 0,01 Gew.-% eines oder mehrerer unterschiedlicher Entschäumer enthalten.

Als Konservierungsmittel kann der Weichspüler aus dem Stand der Technik als geeignet bekannte bakterizide und/oder fungizide Wirkstoffe enthalten, wobei wasserlösliche Wirkstoffe bevorzugt sind. Beispiele für geeignete handelsübliche Bakterizide sind Methylparaben, 2-Brom-2-nitro-1,3-propandiol, 2-Methyl-4-isothiazolin-3-on und 5-Chlor-2-methyl-4-isothiazolin-3-on. Ebenso kann der wässrige Weichspüler als Konservierungsmittel einen Oxidationsinhibitor enthalten. Beispiele für geeignete handelsübliche Oxidationsinhibitoren sind Ascorbinsäure, 2,6-Di-tert-butyl-4-methylphenol (BHT), Butylhydroxyanisol (BHA), Tocopherol und Propylgallat. Insbesondere können die erfindungsgemäßen Zusammensetzungen von 0,0001 bis 0,5, besonders bevorzugt 0,001 bis 0,2 Gew.-% eines oder mehrerer unterschiedlicher Konservierungsmittel enthalten. Insbesondere können die erfindungsgemäßen Zusammensetzungen von 0,001 bis 0,1 Gew.-%, bevorzugt 0,001 bis 0,01 Gew.-% eines oder mehrerer unterschiedlicher Oxidationsinhibitoren enthalten.

Als organische Lösemittel kann der Weichspüler z. B. kurzkettige Alkohole, Glykole und Glykolmonoether enthalten, wobei Ethanol, 2-Propanol, 1,2-Propandiol und Dipropylenglycol bevorzugt wird. Insbesondere können die erfindungsgemäßen Zusammensetzungen von 0,1 bis 10 Gew.-%, bevorzugt von 0,2 bis 5 Gew.-% eines oder mehrerer unterschiedlicher organischer Lösemittel enthalten.

Der Weichspüler kann eines oder mehrere nicht siloxanhaltige Polymere enthalten. Beispiele dafür sind Carboxymethylcellulose, Polyethylenglycol, Poylvinylalkohol, Poly(meth)acrylate, Polyethylenimine oder Polysaccharide. Insbesondere können die erfindungsgemäßen Zusammensetzungen von 0,01 bis 25 Gew.-%, besonders bevorzugt von 0,1 bis 10 Gew.-% eines oder mehrerer unterschiedlicher nichtsiloxanhaltiger Polymere enthalten.

Der Weichspüler kann darüber hinaus optional einen oder mehrere Emulgatoren enthalten. Die Emulgatoren können dabei kationischer oder ungeladener Natur sein. Beispiele für ungeladene Emulgatoren sind Fettalkoholethoxylate.

Der Weichspüler kann ein Komplexierungsmittel enthalten. Beispiele dafür sind neben Aminocarbonsäureverbindungen, organische Aminophosphonsäurederivate und Mischungen davon. Beispiele für geeignete Aminocarbonsäureverbndungen sind Ethylendiamintetraessigsäure (EDTA), N-Hydroxyethylendiamin triessigsäure, Nitrilotriessigsäure (NTA), Diethylentriamin pentaessigsäure (DEPTA). Beispiele für geeignete Aminophosphonsäurederivate sind Ethylendiamin tetrakis(methylenphosphonsäure), 1-Hydroxyethan-1,1-diphosphonsäure (HEDP) und Aminotri-(methylenphosphonsäure) kommerziell erhältlich von Monsanto unter dem Handelsnamen Dequest 2000. Insbesondere können die erfindungsgemäßen Zusammensetzungen von 0,001 bis 0,5 Gew.-%, besonders bevorzugt von 0,005 - 0,25 Gew.-% eines oder mehrerer Komplexierungsmittel enthalten.

Die textilweichmachende Formulierung kann darüber hinaus weitere, hier nicht aufgelistete, Zusatzstoffe enthalten, die für den Fachmann offensichtlich bzw. Stand der Technik sind.

Weiterer Gegenstand der Erfindung ist die Verwendung der erfindungsgemäß hergestellten Stickstoff-haltige Gruppen enthaltende Polysiloxanen bzw. der erfindungsgemäße Zusammensetzungen in oder als Wasch- oder Reinigungsmitteln. Durch das Einbringen in ein Wasch- oder Reinigungsmittel steht dem Verbraucher ein Textil-pflegendes Wasch- oder Reinigungsmittel ("2in1"-Wasch- oder Reinigungsmittel) zur Verfügung und er braucht nicht zwei Mittel (Wasch- oder Reinigungsmittel und Weichspüler) zu dosieren, sowie keinen separaten Spülgang. Zusätzlich zu der Textil-pflegenden Zusammensetzung und den Tensiden können die Wasch- oder Reinigungsmittel weitere Inhaltsstoffe enthalten, die die anwendungstechnischen und/oder ästhetischen Eigenschaften des Wasch- oder Reinigungsmittels weiter verbessern. Bevorzugte Wasch- oder Reinigungsmittel enthalten zusätzlich einen oder mehrere Stoffe aus der Gruppe der Tenside, Gerüststoffe, Bleichmittel, Bleichaktivatoren, Enzyme, Parfüme, Parfümträger, Fluoreszenzmittel, Farbstoffe, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie UV-Absorber. Insbesondere können die erfindungsgemäßen Zusammensetzungen als Wasch- oder Reinigungsmittel zwischen 0,001 und 90, besonders bevorzugt 0,01 bis 45 Gew.-% eines oder mehrerer der hier genannten weiteren Inhaltsstoffe enthalten.

Beispiele für einsetzbare Tenside werden in der WO 2007/115872, Seite 17, Zeile 28 bis Seite 21, Zeile 24 beschreiben.

Beispiele für Gerüststoffe, Builder, Bleichmittel, Bleichaktivatoren, Bleichkatalysatoren und Enzymen werden in der WO 2007/115872, Seite 22, Zeile 7 bis Seite 25, Zeile 26 beschrieben Antiredepositionsmittel, optischen Aufheller, Vergrauungsinhibitoren, Farbübertragungsinhibitoren werden beispielhaft in der WO 2007/115872 auf Seite 26, Zeile 15 bis Seite 28, Zeile 2 beschrieben Beispiele von Knitterschutzmittel, antimikrobiellen Wirkstoffe, Germizide, Fungizide, Antioxidantien, Konservierungs-mittel, Antistatika, Bügelhilfsmittel, UV-Absorber werden in der WO 2007/115872 auf den Seiten 28, Zeile 14 bis 30, Zeile 22 beispielhaft beschrieben.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele:

### Messmethoden:

Die Aufnahme und Interpretation der NMR-Spektren ist dem Fachmann bekannt. Als Referenz sei hiermit eingeführt das Buch "NMR Spectra of Polymers and Polymer Additives" von A. Brandolini und D. Hills, erschienen im Jahr 2000 beim Verlag Marcel Dekker Inc.. Die Bestimmung der Kettenlänge der Siloxane erfolgte NMR-spektroskopisch. Die Kettenlänge gibt das statistische Mittel der Summe aller R₃SiO_{1/2}-, R₂SiO-, RSiO_{3/2}- und SiO₂-Einheiten, also aller im Siloxan polymer gebundenen monomeren Siloxy-Einheiten an. Die Viskosität wurde mit einem Rotationsviskosimeter der Firma Brookfield (Gerätetyp LVT) und der Spindel LV 4 in Anlehnung an die DIN 5391 bestimmt.

### Beispiel S1 (erfindungsgemäß): Herstellung eines seitständig modifizierten Aminopropylsiloxans unter Verwendung von Ethylphosphonsäure

In einem Vierhals-Rundkolben ausgestattet mit Rührer, Innenthermometer und Destillationsbrücke wurden 238,1 g (65 mmol) eines dihydroxyfunktionellen Polydimethylsiloxans der mittleren Kettenlänge 49,2 und 0,43 g Ethylphosphonsäure (98%ig, ABCR GmbH) unter Rühren aufgeheizt. Bei 87°C wurden 1,47 g (9,1 mmol) Hexamethyldisilazan (Dynasylan^{®} HMDS, Evonik Industries AG) zugegeben. Nach weiterem Aufheizen auf 100°C wurde 30 Minuten bei dieser Temperatur gerührt. Dann wurden 12,45 g (65 mmol) Aminopropyl-methyl-diethoxysilan (Dynasylan^{®} 1505, Evonik Industries AG) zugegeben und 4 Stunden bei 10-20 mbar destilliert. Als Rückstand wurde ein farbloses, klares, flüssiges Produkt mit einer Viskosität von 2100 mPa*s bei 25°C erhalten. Die mittels ²⁹Si-NMR bestimmte mittlere Kettenlänge betrug 268.

### Beispiel S2 (erfindungsgemäß): Herstellung eines seitständig modifizierten N-(Aminoethyl)-aminopropylsiloxans unter Verwendung von Octylphosphonsäure

In einem Vierhals-Rundkolben ausgestattet mit Rührer, Innenthermometer und Destillationsbrücke wurden 238,3 g (65 mmol) eines dihydroxyfunktionellen Polydimethylsiloxans der mittleren Kettenlänge 49,2 und 0,76 g Octylphosphonsäure (Hostaphat OPS 100, Clariant Produkte GmbH) unter Rühren aufgeheizt. Bei 80°C wurden 1,68 g (10,4 mmol) Hexamethyldisilazan (Dynasylan^{®} HMDS, Evonik Industries AG) zugegeben und 30 Minuten bei 85°C gerührt. Dann wurden 10,71 g (52 mmol) N-(Aminoethyl)-aminopropyl-methyl-dimethoxysilan (Dynasylan^{®} 1411, Evonik Industries AG) zugegeben und 1 Stunde bei 85°C gerührt. Dann wurden weitere 0,25 g Octylphosphonsäure zugegeben und 3 Stunden bei 100°C und 20 mbar das entstandene Methanol abdestilliert. Als Rückstand wurde ein farbloses, klares, flüssiges Produkt mit einer Viskosität von 14900 mPa*s bei 25°C erhalten. Die mittels ²⁹Si-NMR bestimmte mittlere Kettenlänge betrug 299. Nach einem Monat Lagerung bei Raumtemperatur sinkt die Viskosität auf 8200 mPa*s bei 25°C.

### Beispiel S3 (erfindungsgemäß): Herstellung eines seitständig modifizierten Aminopropylsiloxans unter Verwendung von Ethylphosphonsäure

In einem Vierhals-Rundkolben ausgestattet mit Rührer, Innenthermometer und Destillationsbrücke wurden 238,1 g (65 mmol) eines dihydroxyfunktionellen Polydimethylsiloxans der mittleren Kettenlänge 49,2 und 0,43 g Ethylphosphonsäure (98%ig, ABCR GmbH) unter Rühren aufgeheizt. Bei 73°C wurden 1,46 g (9,1 mmol) Hexamethyldisilazan (Dynasylan^{®} HMDS, Evonik Industries AG) zugegeben. Nach weiterem Aufheizen auf 85°C wurde 30 Minuten bei dieser Temperatur gerührt. Dann wurden 9,94 g (52 mmol) Aminopropyl-methyl-diethoxysilan (Dynasylan^{®} 1505, Evonik Industries AG) zugegeben und 4 Stunden bei 85°C und 14-20 mbar destilliert. Als Rückstand wurde ein farbloses, klares, flüssiges Produkt mit einer Viskosität von 2700 mPa*s bei 25°C erhalten. Die mittels ²⁹Si-NMR bestimmte mittlere Kettenlänge betrug 305.

### Beispiel S4 (nicht erfindungsgemäß): Herstellung eines seitständig modifizierten N-(Aminoethyl)-aminopropylsiloxans unter Verwendung von Carbonsäuren

In einem Vierhals-Rundkolben ausgestattet mit Rührer, Innenthermometer und Destillationsbrücke wurden 383,7 g (100 mmol) eines dihydroxyfunktionellen Polydimethylsiloxans der mittleren Kettenlänge 51,5, 1,68 g (10,4 mmol) Hexamethyldisilazan (Dynasylan^{®} HMDS, Evonik Industries AG) und 0,12 g Essigsäure (99%ig, Sigma Aldrich) unter Rühren auf 85°C aufgeheizt und 40 min bei dieser Temperatur gerührt. Es wurden 16,5 g (80 mmol) N-(Aminoethyl)-aminopropyl-methyl-dimethoxysilan (Dynasylan^{®} 1411, Evonik Industries AG) und 0,63 g Isononansäure (97%, Alfa Aesar) zugegeben und 2 Stunden bei 85°C und 20 mbar das entstandene Methanol abdestilliert. Als Rückstand wurde ein gelbliches, leicht trübes, flüssiges Produkt mit einer Viskosität von 7800 mPa*s bei 25°C erhalten. Die mittels ²⁹Si-NMR bestimmte mittlere Kettenlänge beträgt 250. Bereits nach einer Woche Lagerung bei Raumtemperatur war die Viskosität auf 18100 mPa*s bei 25°C angestiegen.

### Beispiel S5 (erfindungsgemäß): Herstellung eines seitständig modifizierten N-(Aminoethyl)-aminopropylsiloxans unter Verwendung von Ethylphosphonsäure

In einem Vierhals-Rundkolben ausgestattet mit Rührer, Innenthermometer und Destillationsbrücke wurden 238,32 g (65 mmol) eines dihydroxyfunktionellen Polydimethylsiloxans der mittleren Kettenlänge 49,2 und 0,43 g Ethylphosphonsäure (98%ig, ABCR GmbH) unter Rühren aufgeheizt. Bei 80°C wurden 1,68 g (10,4 mmol) Hexamethyldisilazan (Dynasylan^{®} HMDS, Evonik Industries AG) zugegeben und 30 min bei 85°C gerührt. Dann wurden 10,72 g (52 mmol) N-(Aminoethyl)-aminopropyl-methyl-dimethoxysilan (Dynasylan^{®} 1411, Evonik Industries AG) zugegeben und 1 Stunde bei 85°C gerührt. Nach Aufheizen auf 100°C wurde eine Stunde bei 10-20 mbar destilliert. Als Rückstand wurde ein farbloses, milchig trübes, flüssiges Produkt mit einer Viskosität von 1350 mPa*s bei 25°C erhalten. Die mittels ²⁹Si-NMR bestimmte mittlere Kettenlänge betrug 166.

### Beispiel S6: Herstellung eines seitständig mit N-(Aminoethyl)-aminopropylgruppen und Guanidinopropylgruppen modifizierten Siloxans

In einem Vierhals-Rundkolben ausgestattet mit Rührer, Innenthermometer und Destillationsbrücke wurden 2487,42 g Aminopropyl-methyl-diethoxysilan (Dynasylan^{®} 1505, Evonik Industries AG) und 1800 g Ethanol vorgelegt und unter Rühren bei Raumtemperatur innerhalb von 30 min 702 g Essigsäure (99-100%ig, J.T.Baker) zugetropft. Die Temperatur stieg auf 63°C. Nach Aufheizen auf 80°C wurde unter Rühren eine Lösung von 273,13 g Cyanamid F 1000 (Alzchem Trostberg GmbH) in 800 g Ethanol über einen Zeitraum von 2h 45 min zugetropft. Es wurde noch 9 weitere Stunden bei 80°C gerührt. Eine kleine Probe wurde entnommen und bei 60°C 1h bei 10-20 mbar abdestilliert. Der Rückstand entsprach 54,7 Gew.-% und stellt den auf diese Weise bestimmten Festkörpergehalt der ethanolischen Guanidinopropyl-methyl-diethoxysilan-Lösung dar.

In einem Vierhals-Rundkolben ausgestattet mit Rührer, Innenthermometer und Destillationsbrücke wurden 274,98 g (75 mmol) eines dihydroxyfunktionellen Polydimethylsiloxans der mittleren Kettenlänge 49,2 und 0,87 g Octylphosphonsäure (Hostaphat OPS 100, Clariant Produkte GmbH) unter Rühren aufgeheizt. Bei 80°C wurden 1,94 g (12 mmol) Hexamethyldisilazan (Dynasylan^{®} HMDS, Evonik Industries AG) zugegeben und 30 Minuten bei 85°C gerührt. Dann wurden 6,18 g (30 mmol) N-(Aminoethyl)-aminopropyl-methyl-dimethoxysilan (Dynasylan^{®} 1411, Evonik Industries AG) und 14,61 g der 54,7%igen ethanolischen Guanidinopropyl-methyl-diethoxysilan-Lösung zugegeben und 1 Stunde bei 85°C gerührt. Dann wurden weitere 0,29 g Octylphosphonsäure zugegeben und 3 Stunden bei 100°C und 20 mbar das entstandene Methanol und Ethanol abdestilliert. Als Rückstand wurde ein farbloses, trübes, viskoses Produkt erhalten, welches mit 2 Gew.-% 2-Propanol versetzt wurde und dann eine Viskosität von 3340 mPa*s bei 25°C aufweist. Die mittels ²⁹Si-NMR bestimmte mittlere Kettenlänge beträgt 227.

### Beispiel S7: Herstellung eines nicht endverkappten seitständig modifizierten Aminopropylsiloxans unter Verwendung von Ethylphosphonsäure

In einem Vierhals-Rundkolben ausgestattet mit Rührer, Innenthermometer und Destillationsbrücke wurden 238,3 g (65 mmol) eines dihydroxyfunktionellen Polydimethylsiloxans der mittleren Kettenlänge 49,2 und 0,43 g Ethylphosphonsäure (98%ig, ABCR GmbH) unter Rühren aufgeheizt. Bei 85°C wurden 9,95 g (52 mmol) Aminopropyl-methyl-diethoxysilan (Dynasylan^{®} 1505, Evonik Industries AG) zugegeben. Dann wurde Vakuum angelegt und 3 Stunden bei 100°C und 20 mbar destilliert. Als Rückstand wurde ein farbloses, leicht trübes, flüssiges Produkt mit einer Viskosität von 6700 mPa*s bei 25°C erhalten. Die mittels ²⁹Si-NMR bestimmte mittlere Kettenlänge betrug 342.

### Beispiel S8: Herstellung eines mit 1-Octadecanol endverkappten seitständig modifizierten Aminopropylsiloxans unter Verwendung von Ethylphosphonsäure

In einem Vierhals-Rundkolben ausgestattet mit Rührer, Innenthermometer und Destillationsbrücke wurden 238,1 g (65 mmol) eines dihydroxyfunktionellen Polydimethylsiloxans der mittleren Kettenlänge 49,2 und 0,43 g Ethylphosphonsäure (98%ig, ABCR GmbH) unter Rühren aufgeheizt. Bei 80°C wurden 9,94 g (52 mmol) Aminopropyl-methyl-diethoxysilan (Dynasylan^{®} 1505, Evonik Industries AG) zugegeben. Dann wurde Vakuum angelegt und 1 Stunde bei 85°C und 18 mbar destilliert. Dann wurden 7,02 g (26 mmol) 1-Octadecanol (Tego^{®} Alkanol 18, Evonik Industries AG) zugegeben und 3 Stunden bei 100°C und 16 mbar destilliert. Als Rückstand wurde ein farbloses, trübes, bei Raumtemperatur hochviskoses Produkt erhalten. Die mittels ²⁹Si-NMR bestimmte mittlere Kettenlänge betrug 244.

### Beispiel S9 (erfindungsgemäß): Herstellung eines verzweigten seitständig modifizierten Aminopropylsiloxans unter Verwendung von Octylphosphonsäure

In einem Vierhals-Rundkolben ausgestattet mit Rührer, Innenthermometer und Destillationsbrücke wurden 183,3 g (50 mmol) eines dihydroxyfunktionellen Polydimethylsiloxans der mittleren Kettenlänge 49,2 und 0,58 g Octylphosphonsäure (Hostaphat OPS 100, Clariant Produkte GmbH) unter Rühren aufgeheizt. Bei 80°C wurden 3,23 g (20 mmol) Hexamethyldisilazan (Dynasylan^{®} HMDS, Evonik Industries AG) zugegeben und 30 min bei 85°C gerührt. Dann wurden 4,43 g (20 mmol) Aminopropyltriethoxysilan (99%ig, Sigma Aldrich) und weitere 0,19 g Octylphosphonsäure zugegeben und 4 Stunden bei 100°C und 10-20 mbar destilliert. Als Rückstand wurde ein farbloses, klares, flüssiges Produkt mit einer Viskosität von 2320 mPa*s bei 25°C erhalten. Die mittels ²⁹Si-NMR bestimmte mittlere Kettenlänge betrug 133.

### Beispiel 10: Warmlagertest bei Raumtemperatur und bei 50°C:

100 g Glasflaschen wurden jeweils etwa zur Hälfte mit den Produkten der Beispiele S1 bis S5 gefüllt und bei Raumtemperatur gelagert oder in einen auf 50°C temperierten Trockenschrank gestellt. In den in den Tabellen 1a und 1b angegeben zeitlichen Abständen wurde das Aussehen überprüft und optional die Viskosität bei 25°C gemessen, wenn der optische Eindruck eine veränderte Viskosität anzeigte. Die Ergebnisse sind in den Tabellen 1a und 1b dargestellt.

**Tabelle 1a: Ergebnisse des Warmlagertests**

| Lagerzeit / 50°C | Beispiel S3 | Beispiel S4 | Beispiel S5 |
|---|---|---|---|
| 0 Wochen | farblos, klar 2700 mPa*s | gelblich, trüb 7800 mPa*s | farblos, leicht trüb 1350 mPa*s |
| 4 Wochen | farblos, klar | gelb, trüb hochviskos | farblos, leicht trüb 3200 mPa*s |
| 8 Wochen | farblos, klar | - | farblos, leicht trüb 4500 mPa*s |
| 12 Wochen | farblos klar 2960 mPa*s | - | - |

**Tabelle 1b: Ergebnisse der Raumtemperaturlagerung**

| Lagerzeit bei Raumtemperatur | Beispiel S1 | Beispiel S2 | Beispiel S4 |
|---|---|---|---|
| 0 Wochen | farblos, klar 2100 mPa*s | farblos, klar 14900 mPa*s | gelblich, trüb 7800 mPa*s |
| 1 Woche | farblos,klar | - | gelb, trüb 18100 mPa*s |
| 4 Wochen | farblos, klar | farblos, klar 8200 mPa*s | gelb, trüb hochviskos |
| 12 Wochen | farblos klar 2550 mPa*s | - | - |

Ein Vergleich der Beispiele S1, S2, S3 und S5 mit Beispiel S4 macht deutlich, dass die nach dem erfindungsgemäßen Verfahren hergestellten aminofunktionellen Siloxane weder nach Herstellung noch bei Lagerung eine Vergilbung aufweisen.

Der Vergleich von Beispiel S5 mit Beispiel S4 zeigt, dass die Viskosität der nach dem erfindungsgemäßen Verfahren hergestellten aminofunktionellen Siloxane weniger stark ansteigt. Im bevorzugten Fall, wie in Beispiel S2 gezeigt, findet gar kein Viskositätsanstieg statt.

### Beispiel 11: Anwendungsbeispiele Textlipflege

Zur Bestimmung der weichmachenden Wirkung der Stickstoffhaltigen Gruppen enthaltenden Polysiloxane auf textilen Geweben wurden Baumwolltücher damit behandelt.

Dazu wurden von den erfindungsgemäßen Stickstoff-haltigen Gruppen enthaltenden Polysiloxanen und Verbindungen D) aufweisenden Zusammensetzungen, die als Produkte in den Beispielen S1 bis S3 und den Beispielen S5 und S6 erhalten wurden, Makroemulsionen nach der folgenden Vorschrift hergestellt:
20 Teile eines auf 40°C erwärmten erfindungsgemäßen Stickstoff-haltigen Gruppen enthaltenden Polysiloxans wurden in einem Becherglas mit Propellerrührer unter Rühren vorgelegt. Anschließend wurden der Reihe nach 10 Gew.-Teile Dipropylenglykol, 10 Gew.-Teile TEGO^{®} Alkanol L6 (Laurylalkoholpolyethoxilat (n=6) der Evonik Goldschmidt GmbH) unter Rühren hinzu gegeben. Zuletzt wurde mit Wasser auf 100 Gew.-Teile aufgefüllt und solange nachgerührt bis die Mischung auf Raumtemperatur abgekühlt war, mindestens jedoch 15 min. Die Emulsionen sind bei Raumtemperatur trübe.

**Tabelle 2: Hergestellte Polysiloxanformulierungen (Makroemulsionen)**

| Formulierungsbeispiel | verwendetes Reaktionsprodukt aus |
|---|---|
| M1 | Beispiel S1 |
| M2 | Beispiel S2 |
| M3 | Beispiel S3 |
| M5 | Beispiel S5 |
| M6 | Beispiel S6 |

Von der in Beispiel S1 als Produkt erhaltenen erfindungsgemäßen Zusammensetzung wurde eine Mikroemulsion (ME1) mit einer Zusammensetzung wie in Tabelle 3 angegeben hergestellt.

**Tabelle 3: Zusammensetzung der Polysiloxanformulierungen (Mikroemulsion (ME1)**

| **Bestandteil / Gew.-%** | **ME1** |
|---|---|
| Reaktionsprodukt aus Beispiel S1 | 49,5 |
| TEGO^{®} Alkanol TD6, Evonik Goldschmidt GmbH (POE-(6)-isotridecyl Alcohol) | 6,6 |
| TEGO^{®} Alkanol TD12, Evonik Goldschmidt GmbH (POE-(12)-isotridecyl) | 24,2 |
| TEGOSOFT^{®} P, Evonik Goldschmidt GmbH (Isopropylpalmitat) | 9,9 |
| Wasser | 9,8 |

TEGO^{®} Alkanol TD6, TEGO^{®} Alkanol TD12 und TEGOSOFT^{®} P wurden bei Raumtemperatur in einem Becherglas mit Propellerrührer unter Rühren vorgelegt. Anschließend wurde das Reaktionsprodukt aus Beispiel S1 unter Rühren hinzugegeben. Zuletzt wurde unter langsamer Zugabe von Wasser auf 100 Gew.-Teile aufgefüllt und solange nachgerührt bis die Mischung klar war.

### Beispiel 12: Herstellung eines Weichspülers enthaltend das erfindungsgemäße Polysiloxan aus Beispiel S1:

33,3 g eines auf 60°C erwärmten flüssigen REWOQUAT^{®} WE 18 (Handelname der Evonik Goldschmidt GmbH, Triethanolamin basiertes Esterquat mit einem Aktivgehalt von 90%) wurde unter Rühren zu 556 g auf 55°C erwärmtes Leitungswasser gegeben, 20 min mit einem Propellerrührer bei 50°C gerührt, anschließend wurden 6 g der Mikroemulsion aus Formulierungsbeispiel ME1 hinzugeben und innerhalb von ca. einer Stunde auf Raumtemperatur abgekühlt.

### Vorbehandlung des Baumwollgewebes:

Baumwollfrottiergewebe von einer Größe von 80 cm x 50 cm mit einem Flächengewicht von ca. 350 g/m² wurden zweimal mit Vollwaschpulver gewaschen, zweimal gespült, geschleudert und einlagig auf einer Leine hängend an der Luft getrocknet.

### Behandlung des Baumwollgewebe:

Die oben beschriebenen Polysiloxanformulierungen M1, M2, M3, M5, M6 und ME 1 wurden jeweils mit kaltem Leitungswasser zu einer Spüllösung verdünnt, die 0,025 Gew.-% an erfindungsgemäß hergestelltem Polysiloxan enthielt.

Die Baumwolltücher wurden 10 min in zwei Liter der Spüllösung getaucht. Dabei ist zu beachten, dass die Tücher gleichmäßig von der Spüllösung benetzt werden. Anschließend wurden die Tücher geschleudert und bei Raumtemperatur einlagig auf einer Leine hängend getrocknet. Die behandelten Baumwollfrottiertücher wurden in 10 gleiche Stücke von 16 cm auf 25 cm geschnitten.

Zur Beurteilung des Weichgriffes wurde ein erfahrenes Team aus 9 Testpersonen zusammengestellt, das die anonymisierten Griffmuster, der mit den Emulsionen ausgerüsteten Baumwollgewebe, mit Hilfe eines Handpaneltests bewertete. Dabei erhält jede Testperson ein eignes Baumwolltuch. Die Beurteilung erfolgt dabei auf einer Skala von 0 (hart und unangenehm im Griff) bis 5 (weich und angenehm im Griff) mit der Möglichkeit zu ganzzahligen Zwischenwerten.

Zur Beurteilung des Weichgriffes wurden die Einzelbewertungen summiert, so dass sich bei 9 Testpersonen ein maximaler Weichgriff von 45 ergeben kann.

Bei den Griffmustern wurde zusätzlich immer eine nicht offensichtlich gekennzeichnete unbehandelte Probe (Blindwert) hinzugelegt.

Die Ergebnisse der Beurteilung des Weichgriffs sind in Tabelle 4 angegeben.

**Tabelle 4: Zusammenfassung der Weichgriffergebnisse**

| Baumwollgewebe behandelt mit Polysiloxanformulierung | Weichgriff |
|---|---|
| M1 | 37 |
| M2 | 37 |
| M3 | 35 |
| M5 | 35 |
| M6 | 36 |
| ME1 | 34 |
| ohne Polysiloxan ("Blindwert") | 0 |

Aus den Daten in Tabelle 4 ist deutlich zu erkennen, dass die erfindungsgemäßen Stickstoffhaltige Gruppen enthaltenden Polysiloxane geeignet sind, um einen stark verbesserten Weichgriff gegenüber einem unbehandelten Baumwolltuch zu erzielen.

## Patentansprüche

1. Verfahren zur Herstellung von aminofunktionellen Polysiloxanen durch Umsetzung der Komponenten
A) gleiche oder unterschiedliche endständig hydroxyfunktionelle, lineare oder verzweigte Polysiloxane,
B) gleiche oder unterschiedliche Alkoxysilane der Formel (I)
R¹ₓR²₃₋ₓSiR³ (I)
mit
R¹ gleiche oder verschiedene Alkylreste mit 1 bis 4 Kohlenstoffatomen, vorzugsweise Methyl- oder Ethylreste, bevorzugt Methylreste,
R² gleiche oder verschiedene, vorzugsweise gleiche, Alkoxyreste mit 1 bis 4 Kohlenstoffatomen, vorzugsweise Methoxy- oder Ethoxyreste,
R3 zumindest ein Stickstoffatom aufweisender organischer Rest,
x = 0 bis 2, vorzugsweise 0 oder 1, und
C) Wasser,
in Gegenwart einer oder mehrerer Phosphor-haltigen, Brönstedt-sauren Verbindungen D) **dadurch gekennzeichnet, dass** die Menge der eingesetzten Komponente D) von 0,1 bis 30 mol-%, bezogen auf die Menge an eingesetzten Alkoxysilanen der Komponente B) beträgt,
wobei als weitere Komponente E) ein Disilazan eingesetzt wird.

2. Verfahren nach Anspruch 1, **dadurch gekennzeichnet, dass** als Verbindung D) eine Verbindung der Summenformel (II)
HₐR¹¹_{b}P_{c}O_{d} (II)
mit
R¹¹ = gleiche oder verschiedene, vorzugsweise gleiche, ein- oder mehrwertige, gegebenenfalls Sauerstoff- und/oder Stickstoffatom(e) aufweisende Kohlenwasserstoffreste,
a = (c + 2) oder < (c + 2)
b = (c + 2) oder < (c + 2)
c = 1 bis 10, vorzugsweise 1 bis 5, insbesondere 1
d = (3c + 1) oder < (3c + 1)
mit der Maßgabe, dass a + b = c + 2 und a > 0, vorzugsweise größer-gleich 1 ist, eingesetzt wird.

3. Verfahren nach Anspruch 1 oder 2, **dadurch gekennzeichnet, dass** als Komponente E) 1,1,1,3,3,3-Hexamethyldisilazan eingesetzt wird.

4. Verfahren nach zumindest einem der Ansprüche 1 bis 3, **dadurch gekennzeichnet, dass** die Menge der eingesetzten Verbindungen D) von 1 bis 20 mol-%, bevorzugt von 5 bis 15 mol-% bezogen auf die Menge an eingesetzten Alkoxysilanen der Komponente B beträgt.

5. Verfahren gemäß zumindest einem der Ansprüche 1 bis 4, **dadurch gekennzeichnet, dass** der Anteil an Wasser bezogen auf die Gesamtmenge der Komponenten A) bis D) von 0,001 bis 1 Gew.-% beträgt.

6. Verfahren gemäß zumindest einem der Ansprüche 1 bis 5, **dadurch gekennzeichnet, dass** die Komponenten A) und B) in solchen Mengen eingesetzt werden, dass das molare Verhältnis von OH-Gruppen der Komponente A) zu Resten R² der Komponente B) 1 zu 1 oder >1 zu 1 beträgt.

7. Verfahren gemäß zumindest einem der Ansprüche 1 bis 6, **dadurch gekennzeichnet, dass** als Komponente D) monomere oder oligomere Phosphorsäuren, monomere oder oligomere Phosphon- oder Phosphinsäuren, Hypodiphosphon- oder Hypodiphosphinsäuren, oder mit Kohlenwasserstoffresten substituierte organische Derivate einer der vorgenannten Säuren eingesetzt werden.

8. Verfahren nach Anspruch 7, **dadurch gekennzeichnet, dass** als Komponente D) Octylphosphonsäure eingesetzt wird.

9. Stickstoff-haltige Gruppen enthaltendes Polysiloxan, hergestellt nach einem Verfahren gemäß einem der Ansprüche 1 bis 8.

10. Zusammensetzung, die ein Stickstoff-haltige Gruppen enthaltendes Polysiloxan aufweist, erhalten durch ein Verfahren gemäß einem der Ansprüche 1 bis 8.

11. Verwendung eines eine Stickstoff-haltige Gruppe enthaltenden Polysiloxans gemäß Anspruch 9 oder einer Zusammensetzung gemäß Anspruch 10, als Bestandteil von Textil-pflegenden Zusammensetzungen, Wasch- oder Reinigungsmitteln für Textilien oder Hydrophobierungsmitteln.

## Claims

1. Process for producing amino-functional polysiloxanes by reacting the components
A) identical or different terminally hydroxy-functional, linear or branched polysiloxanes,
B) identical or different alkoxysilanes of the formula (I)
R¹ₓR²₃₋ₓSiR³ (I)
where
R¹ is identical or different alkyl radicals having 1 to 4 carbon atoms, preferably methyl or ethyl radicals, preferably methyl radicals,
R² is identical or different, preferably identical, alkoxy radicals having 1 to 4 carbon atoms, preferably methoxy or ethoxy radicals,
R³ is an organic radical having at least one nitrogen atom,
x = 0 to 2, preferably 0 or 1, and
C) water,
in the presence of one or more phosphorus-containing, Brønsted-acidic compounds D), **characterized in that** the amount of component D) used is from 0.1 to 30 mol%, based on the amount of alkoxysilanes of component B) used, wherein, as further component E), a disilazane is used.

2. Process according to Claim 1, **characterized in that** as compound D) a compound of the empirical formula (II)
HₐR¹¹_{b}-P_{c}O_{d} (II)
where
R¹¹ = identical or different, preferably identical, mono- or polyvalent hydrocarbon radicals optionally having oxygen and/or nitrogen atom(s),
a = (c + 2) or < (c + 2)
b = (c + 2) or < (c + 2)
c = 1 to 10, preferably 1 to 5, in particular 1
d = (3c + 1) or < (3c + 1)
with the proviso that a + b = c + 2 and a > 0, preferably greater than or equal to 1, is used.

3. Process according to Claim 1 or 2, **characterized in that**, as component E), 1,1,1,3,3,3-hexamethyldisilazane is used.

4. Process according to at least one of Claims 1 to 3, **characterized in that** the amount of compounds D) used is from 1 to 20 mol%, preferably from 5 to 15 mol%, based on the amount of alkoxysilanes of component B used.

5. Process according to at least one of Claims 1 to 4, **characterized in that** the fraction of water based on the total amount of components A) to D) is from 0.001 to 1% by weight.

6. Process according to at least one of Claims 1 to 5, **characterized in that** the components A) and B) are used in amounts such that the molar ratio of OH groups in component A) to radicals R² in component B) is 1:1 or > 1:1.

7. Process according to at least one of Claims 1 to 6, **characterized in that**, as component D), monomeric or oligomeric phosphoric acids, monomeric or oligomeric phosphonic or phosphinic acids, hypodiphosphonic or hypodiphosphinic acids, or hydrocarbon-radical-substituted organic derivatives of one of the aforementioned acids are used.

8. Process according to Claim 7, **characterized in that** octylphosphonic acid is used as component D).

9. Polysiloxane containing nitrogen-containing groups produced by a process according to one of Claims 1 to 8.

10. Composition which has a polysiloxane containing nitrogen-containing groups, obtained by a process according to one of Claims 1 to 8.

11. Use of a polysiloxane containing a nitrogen-containing group according to Claim 9 or a composition according to Claim 10, as constituent of textile-care compositions, detergents or cleaners for textiles or hydrophobicizing compositions.

## Revendications

1. Procédé de fabrication de polysiloxanes à fonction amino par mise en réaction des composants :
A) des polysiloxanes linéaires ou ramifiés, à fonction hydroxy terminale, identiques ou différents,
B) des alcoxysilanes de formule (I) identiques ou différents
R¹ₓR²₃₋ₓSiR³ (I)
avec
R¹ radicaux alkyle de 1 à 4 atomes de carbone identiques ou différents, de préférence radicaux méthyle ou éthyle, de préférence radicaux méthyle,
R² radicaux alcoxy de 1 à 4 atomes de carbone identiques ou différents, de préférence identiques, de préférence radicaux méthoxy ou éthoxy,
R³ radical organique comprenant au moins un atome d'azote,
x = 0 à 2, de préférence 0 ou 1, et
C) de l'eau,
en présence d'un ou de plusieurs composés D) acides de Brönstedt contenant du phosphore, **caractérisé en ce que** la quantité du composant D) utilisé est de 0,1 à 30 % en moles, par rapport à la quantité d'alcoxysilanes du composant B) utilisés,
un disilazane étant utilisé en tant que composant E) supplémentaire.

2. Procédé selon la revendication 1, **caractérisé en ce qu'**un composé de formule globale (II) est utilisé en tant que composé D)
HₐR¹¹_{b}P_{c}O_{d} (II)
avec
R¹¹ = radicaux hydrocarbonés identiques ou différents, de préférence identiques, mono- ou polyvalents, comprenant éventuellement un ou plusieurs atomes d'oxygène et/ou d'azote,
a = (c+2) ou < (c+2)
b = (c+2) ou < (c+2)
c = 1 à 10, de préférence 1 à 5, notamment 1
d = (3c+1) ou < (3c+1)
à condition que a+b = c+2 et a > 0, de préférence supérieur ou égal à 1.

3. Procédé selon la revendication 1 ou 2, **caractérisé en ce que** le 1,1,1,3,3,3-hexaméthyldisilazane est utilisé en tant que composant E).

4. Procédé selon au moins l'une quelconque des revendications 1 à 3, **caractérisé en ce que** la quantité des composés D) utilisés est de 1 à 20 % en moles, de préférence de 5 à 15 % en moles, par rapport à la quantité d'alcoxysilanes du composant B utilisés.

5. Procédé selon au moins l'une quelconque des revendications 1 à 4, **caractérisé en ce que** la proportion d'eau par rapport à la quantité totale des composants A) à D) est de 0,001 à 1 % en poids.

6. Procédé selon au moins l'une quelconque des revendications 1 à 5, **caractérisé en ce que** les composants A) et B) sont utilisés en quantités telles que le rapport molaire entre les groupes OH du composant A) et les radicaux R² du composant B) soit de 1 sur 1 ou > 1 sur 1.

7. Procédé selon au moins l'une quelconque des revendications 1 à 6, **caractérisé en ce que** des acides phosphoriques monomères ou oligomères, des acides phosphoniques ou phosphiniques monomères ou oligomères, des acides hypodiphosphoniques ou hypodiphosphiniques, ou des dérivés organiques substitués avec des radicaux hydrocarbonés d'un des acides susmentionnés sont utilisés en tant que composant D).

8. Procédé selon la revendication 7, **caractérisé en ce que** l'acide octylphosphonique est utilisé en tant que composant D).

9. Polysiloxane contenant des groupes contenant de l'azote, fabriqué par un procédé selon l'une quelconque des revendications 1 à 8.

10. Composition, comprenant un polysiloxane contenant des groupes contenant de l'azote, obtenu par un procédé selon l'une quelconque des revendications 1 à 8.

11. Utilisation d'un polysiloxane contenant des groupes contenant de l'azote selon la revendication 9 ou d'une composition selon la revendication 10, en tant que constituant de compositions pour le soin de textiles, de détergents pour textiles ou d'agents hydrophobants.
